# EUROPÄISCHE PATENTSCHRIFT

(11) **EP 1 923 694 B1**
(45) Veröffentlichungstag und Bekanntmachung des Hinweises auf die Patenterteilung: **10.02.2010**
(21) Anmeldenummer: 07120835.9
(22) Anmeldetag: 16.11.2007
(51) Int. Cl.: G01N 21/53, G01F 1/36

(54) **Verfahren und Vorrichtung zum Bestimmen einer Ölmenge in einer Gasströmung**
Method and device for measuring the amount of oil in a gas flow
Methode et dispositif pour déterminer la quantité d'huile dans un flux de gaz

(30) Priorität: 20.11.2006 DE 102006054848
(43) Veröffentlichungstag der Anmeldung: 21.05.2008
(73) Patentinhaber: MAHLE International GmbH, 70376 Stuttgart (DE)
(72) Erfinder: Feil, Michael, 95444 Bayreuth (DE); Sauter, Hartmut, 71272, Renningen (DE)
(74) Vertreter: Bongen, Renaud & Partner

(56) Entgegenhaltungen:
- DE-A1- 3 638 604
- FR-A- 2 763 685
- GB-A- 1 012 268
- US-A- 4 475 382
- US-A- 4 966 462
- US-A1- 2003 016 357

## Beschreibung

Die vorliegende Erfindung betrifft ein Verfahren sowie eine Vorrichtung zum Bestimmen einer Ölmenge in einem Blow-by-Gasstrom, der von einem Kurbelgehäuse einer Brennkraftmaschine, z.B. in einem Kraftfahrzeug, zu einer Frischgasanlage der Brennkraftmaschine führt. Des Weiteren betrifft die Erfindung eine Brennkraftmaschine, die mit einer derartigen Vorrichtung ausgestattet ist.

Um strenge Umweltschutzbedingungen einhalten zu können, ist es üblich, in ein Kurbelgehäuse einer Brennkraftmaschine während des Betriebs eintretende Blow-by-Gase über eine Rückführleitung in eine Frischgasanlage der Brennkraftmaschine rückzuführen, um so die Blow-by-Gase zu verbrennen und über eine Abgasanlage der Brennkraftmaschine zu emittieren. Für die Auslegung derartiger Rückführsysteme kann es vorteilhaft sein, die Ölmenge bzw. die Ölkonzentration im rückgeführten Blow-by-Gas zu kennen.

Da Blow-by-Gase Öl aus dem Kurbelgehäuse mit sich führen, ist in der Rückführleitung üblicherweise ein Ölabscheider angeordnet, z. B. ein Trägheitsabscheider. Um die Effektivität derartiger Ölabscheider messen zu können, ist es erforderlich, die Ölmenge bzw. die Ölkonzentration im Blow-by-Gas stromab und/oder stromauf des Ölabscheiders zu bestimmen.

Auch sind andere messtechnischen Problemstellungen denkbar, bei denen eine Ölkonzentrationsmessung ebenfalls angewendet werden, wie z.B. Öl nach Turboladern, ölhaltige Aerosole bei Kompressoren, Werkzeugmaschinen oder auch bei Abluftanlagen von Küchen.

Die vorliegende Erfindung beschäftigt sich mit dem Problem, für die Bestimmung der in einem Gasstrom mitgeführten Ölmenge eine vorteilhafte Ausführungsform anzugeben.

Erreicht wird dies durch die Gegenstände der unabhängigen Ansprüche. Vorteilhafte Ausführungsformen sind Gegenstand der abhängigen Ansprüche.

Die Erfindung beruht auf dem allgemeinen Gedanken, zur Messung der Ölkonzentration im Gasstrom eine Sensorik zu verwenden, die Licht in den Gasstrom einbringt und die das den Gasstrom durchdringende Licht bzw. das vom Gasstrom reflektierte bzw. gestreute Licht misst. Dabei können verschiedene Raumrichtungen zur Erfassung des Lichts verwendet werden. Die gemessene Lichtintensität korreliert mit dem Ölgehalt, also mit der Ölkonzentration in der Gasströmung. Über den Volumenstrom der Gasströmung kann, z.B. in Verbindung mit Referenzmessungen, die im Gastrom transportierte Ölmenge in Volumeneinheit pro Zeiteinheit, z.B. in Liter pro Stunde, oder in Masseeinheit pro Zeiteinheit, zum Beispiel Gramm pro Stunde, in Abhängigkeit der gemessenen Lichtintensität bestimmt werden. Beispielsweise sind Kennfelder denkbar, in denen die Lichtintensität und der Volumenstrom einer bestimmten Ölkonzentration bzw. Ölmenge zugeordnet ist. Die Kennfelder können im Rahmen von Referenzmessungen ermittelt werden.

Vorteilhaft ist eine Ausführungsform, bei der im Rahmen der Bestimmung der Ölmenge bzw. der Ölkonzentration die aktuelle Laufleistung der Brennkraftmaschine bzw. des im Kurbelgehäuse enthaltenen Öls berücksichtigt wird. Diese Ausführungsform beruht auf der Erkenntnis, dass das Öl im Kurbelgehäuse mit zunehmender Laufleistung, d.h. in Abhängigkeit der Gesamtbetriebszeit der Brennkraftmaschine, Verunreinigungen aufnimmt, z.B. Ruß, und dadurch eintrübt. Dies wirkt sich auf die Messung der Lichtintensität aus. Um diesen Effekt auszugleichen, kann die Gesamtbetriebszeit bzw. die Laufleistung des Verbrennungsmotors bzw. des Öls bei der Bestimmung der Ölmenge bzw. der Ölkonzentration berücksichtigt werden, beispielsweise über entsprechend abgelegte Kennfelder. Ebenso ist es grundsätzlich möglich, im Ölkreis der Brennkraftmaschine an einer geeigneten Stelle, z.B. in einer Ölwanne, einen Trübungssensor anzuordnen, der die momentane Trübung des Öls bestimmt.

Zur Messung der Öltrübung bzw. zur Messung der Ölmenge bzw. der Ölkonzentration im Gasstrom eignen sich grundsätzlich Sensoren wie sie beispielsweise aus der DE 199 57 592 A1 und aus der DE 101 19 932 A1 bekannt sind.

Das Verfahren, die Vorrichtung und die Brennkraftmaschine nach vorliegender Erfindung eignen sich in besonderer Weise für eine Verwendung in Prüfständen. Ebenso ist ein Einsatz in Versuchsfahrzeugen denkbar. Für Serienfahrzeuge ist eine permanente Messung der Ölmenge bzw. der Ölkonzentration im Blow-by-Gas in der Regel nicht erforderlich. Die Erfindung zeichnet sich insbesondere dadurch aus, dass die Ölmenge bzw. die Ölkonzentration im Blow-by-Gas permanent und quasi in Echtzeit während des Betriebs der Brennkraftmaschine gemessen werden kann. Hierdurch kann beispielsweise die Leistungsfähigkeit eines Ölabscheiders in Abhängigkeit unterschiedlicher Betriebszustände aber auch im transienten Betrieb der Brennkraftmaschine untersucht werden. Ferner kann die Messung sowohl im Vollstrom als auch im Teilstrom Anwendung finden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Vorrichtung zum Bestimmen einer Ölmenge in einem Gasstrom,
- Fig. 2 bis 4: jeweils einen stark vereinfachten, prinzipiellen Längsschnitt durch eine Lichtmesseinrichtung bei unterschiedlichen Einstellungen,
- Fig. 5: einen stark vereinfachten, prinzipiellen Längsschnitt durch eine Volumenstrommesseinrichtung,
- Fig. 6: einen stark vereinfachten, prinzipiellen Längsschnitt durch eine kombinierte Volumenstrom- und Licht-Messeinrichtung,
- Fig. 7: ein stark vereinfachter, prinzipieller Längsschnitt durch eine Lichtmesseinrichtung, bei einer anderen Ausführungsform.

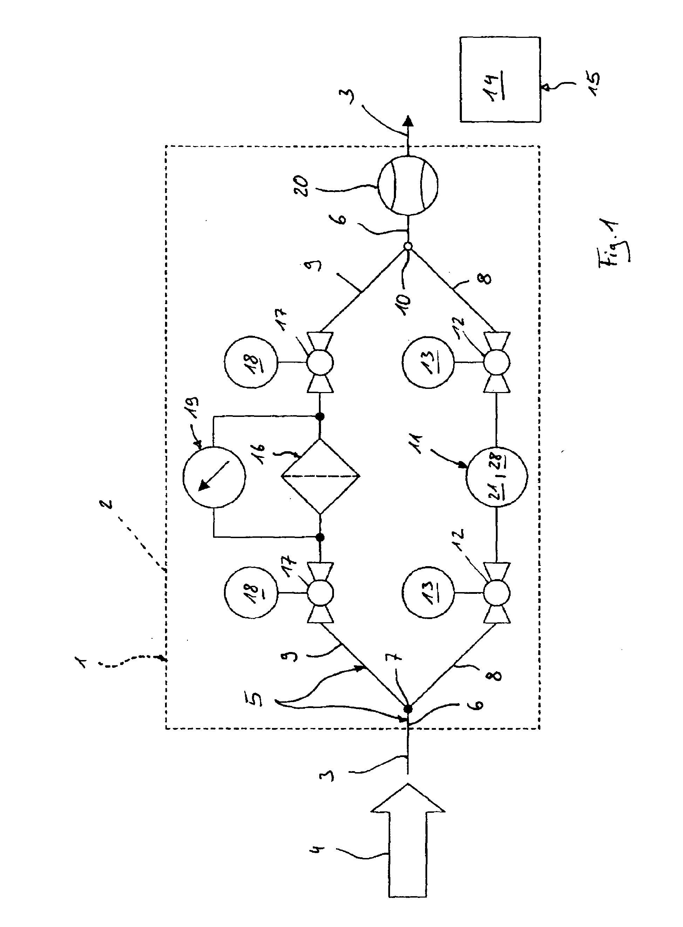

Fig. 1 zeigt allgemein einen Aufbau 1 zur Realisierung eines Verfahrens, mit dessen Hilfe eine in einem Gasstrom transportierte Ölmenge bestimmt werden kann. Der Aufbau 1 ist dabei innerhalb eines durch eine unterbrochene Linie dargestellten Rahmens angeordnet, der durch ein Gehäuse 2 gebildet sein kann. Das Gehäuse 2 kann klimatisiert, insbesondere beheizt, und/oder thermisch isoliert sein. Der Aufbau 1 ist in eine Gas führende Leitung 3 eingesetzt beziehungsweise eingebaut. In dieser Gasleitung 3 wird im Betrieb ein Gas transportiert, das Öl in Form von Tröpfchen beziehungsweise Nebel mit sich führt. Mit Hilfe des Aufbaus 1 kann nun die im Gasstrom transportierte Ölmenge bestimmt werden, beispielsweise das Ölvolumen pro Zeiteinheit oder die Ölmasse pro Zeiteinheit. Grundsätzlich sind beliebige Anwendungen denkbar, bei denen die im Gas transportierte Ölmenge von Interesse sein kann. Von besonderem Interesse ist jedoch die Bestimmung der Ölmenge in einem Blow-by-Gas, das von einem Kurbelgehäuse einer Brennkraftmaschine abgeführt wird und insbesondere einer Frischgasanlage der Brennkraftmaschine zugeführt wird. Dementsprechend handelt es sich in dem hier vorgestellten Beispiel bei der Gasleitung 3 bevorzugt um eine Blow-by-Gasleitung 3.

Die Blow-by-Gasleitung 3 ist eingangsseitig an ein nicht dargestelltes Kurbelgehäuse einer ebenfalls nicht dargestellten Brennkraftmaschine angeschlossen. Die Brennkraftmaschine befindet sich beispielsweise in einem Motorprüfstand. Grundsätzlich ist es ebenfalls möglich, die Brennkraftmaschine in einem Fahrzeug anzuordnen. Ausgangsseitig ist die Blow-by-Gasleitung 3 vorzugsweise an eine nicht gezeigte Frischgasleitung der Brennkraftmaschine angeschlossen. Insbesondere bei einem Prüfstand kann die Blow-by-Gasleitung 3 auch direkt in die Umgebung führen oder zu anderen Messeinrichtungen oder Reinigungseinrichtungen.

In Fig. 1 ist durch einen Pfeil 4 ein mit Öl beladener Blow-by-Gasstrom angedeutet.

Der Aufbau 1 weist eine Leitungsanordnung 5 auf. Diese umfasst eine Hauptleitung 6, die hier exemplarisch bei einer Trennstelle 7 in zwei Leitungszweige, nämlich einen ersten Leitungszweig 8 und einen zweiten Leitungszweig 9 aufzweigt. Die beiden Leitungszweige 8, 9 sind bei einer Verbindungsstelle 10 wieder zur Hauptleitung 6 zusammengeführt.

Der Aufbau bzw. die Anordnung 1 umfasst eine Vorrichtung 11, mit deren Hilfe die im Gasstrom 4 transportierte Ölmenge bestimmt werden kann. Die Vorrichtung 11 ist hier im ersten Zweig 8 angeordnet. Stromauf und stromab der Vorrichtung 11 ist jeweils eine Ventileinrichtung 12 im ersten Zweig 8 angeordnet, wobei jede Ventileinrichtung 12 mit Hilfe einer Stelleinrichtung 13 betätigbar ist. Die Stelleinrichtungen 13 sind auf geeignete Weise mit einer Steuerung 14 verbunden, so dass die Ventileinrichtungen 12 über die Steuerung 14 ansteuerbar sind. Die Steuerung 14 kann dabei zweckmäßig in einen Rechner, insbesondere in einen Computer (PC) integriert sein.

Im gezeigten Beispiel umfasst der Aufbau 1 im zweiten Zweig 9 eine Filtereinrichtung 16, beispielsweise um Referenzmessungen für die im Gasstrom transportierte Ölmenge ausführen zu können. Auch im zweiten Zweig 9 sind stromauf und stromab der Filtereinrichtung 16 Ventileinrichtungen 17 angeordnet, die mit Stelleinrichtungen 18 betätigbar und über die Steuerung 14 ansteuerbar sind. Außerdem ist hier eine Differerenzdruckmesseinrichtung 19 dargestellt, mit deren Hilfe beispielsweise der Beladungszustand der Filtereinrichtung 16 bestimmbar ist.

Die Anordnung 1 umfasst im gezeigten Beispiel optional eine Fördereinrichtung 20, bei der es sich beispielsweise um ein Gebläse oder um eine Pumpe oder dergleichen handeln kann. Mit Hilfe der Fördereinrichtung 20, die hier in der Hauptleitung 6, stromab der Zweige 8, 9 angeordnet ist, lassen sich innerhalb des Aufbaus 1 unterschiedliche Druckgefälle in der Hauptleitung 6 generieren, beispielsweise um unterschiedliche Gasströme 4 zu erzeugen. Mit Hilfe der Fördereinrichtung 20 können beispielsweise Strömungswiderstände der Anordnung 1 eliminiert werden, die in einer üblichen Blow-by-Gasleitung 3 einer Brennkraftmaschine außerhalb eines Prüfungstands, also bei fehlendem Aufbau 1 nicht vorhanden sind.

Für die Messung der Ölmenge im Gasstrom 4 mit Hilfe der Vorrichtung 11 muss nicht der gesamte Gasstrom 4 durch die Vorrichtung 11 geleitet werden, ebenso kann die Messung anhand eines vorbestimmten Teilstroms durchgeführt und auf den Gesamtstrom hochgerechnet werden.

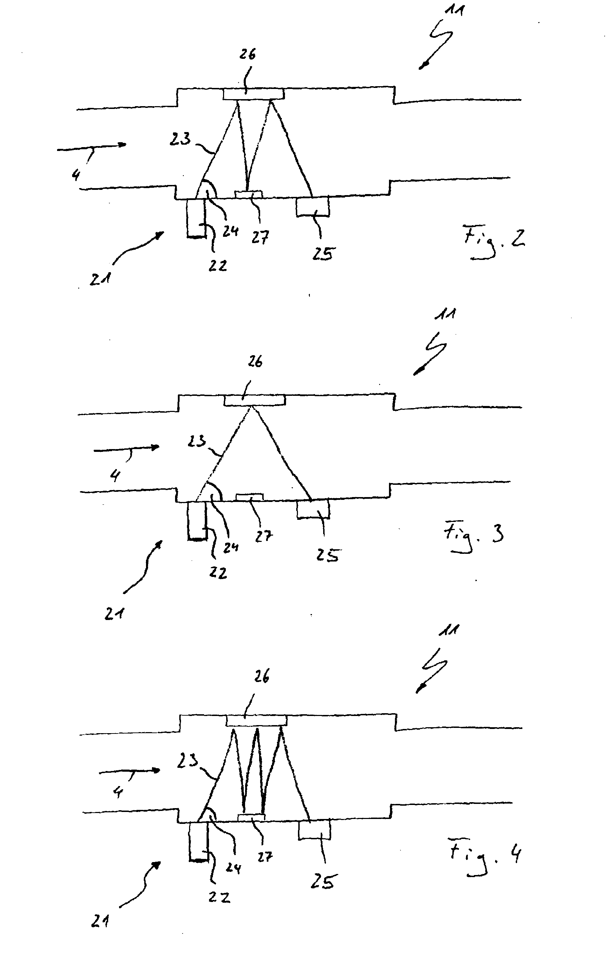

Entsprechend den Fig. 2 bis 4 umfasst die Vorrichtung 11 eine Lichtmesseinrichtung 21, mit deren Hilfe eine Lichtmenge und/oder eine Lichtintensität gemessen werden kann. Die Lichtmesseinrichtung 21 umfasst hierzu zumindest einen Lichtsender 22, mit dessen Hilfe Licht in den Gasstrom 4 eingestrahlt beziehungsweise durch den Gasstrom 4 hindurchgestrahlt wird. Vorzugsweise handelt es sich beim Lichtsender 22 um eine Laserdiode, die einen definierten Lichtstrahl 23 mit einer vorgegebenen Richtung in den Gasstrom 4 einstrahlt. Dabei kann der Lichtsender 22 zweckmäßig so ausgestaltet sein, dass ein Winkel 24, mit dem das Licht 23 in den Gasstrom 4 eingestrahlt wird, einstellbar ist.

Die Lichtmesseinrichtung 21 umfasst außerdem zumindest einen Lichtempfänger 25, mit dessen Hilfe das den Gasstrom durchtretende beziehungsweise das im Gasstrom 4 gestreute Licht gemessen werden kann. Der Lichtempfänger 25 misst dabei die Lichtmenge und/oder die Lichtintensität. Vorzugsweise arbeitet die Lichtmesseinrichtung 21 mit einer Transmissionsmessung. Zusätzlich oder alternativ kann auch eine Reflexionsmessung beziehungsweise eine Streulichtmessung durchgeführt werden.

Um den Lichtweg zwischen dem Sender 22 und dem Empfänger 25 zu vergrößern, kann die Lichtmesseinrichtung 21 eine Spiegelanordnung aufweisen, die hier rein exemplarisch zwei Spiegel, nämlich einen ersten Spiegel 26 und einen zweiten Spiegel 27 aufweist. Bei der in Fig. 2 gezeigten Konfiguration strahlt der Lichtsender 22 das Licht so ab, dass es am ersten Spiegel 26 reflektiert wird, derart, dass es vom ersten Spiegel 26 zum zweiten Spiegel 27 gelangt, und zwar so, dass es vom zweiten Spiegel 27 erneut zum ersten Spiegel 26 gelangt und von diesem zum Empfänger 25 gelangt. Auf diese Weise kann der Lichtweg zwischen Sender 22 und 25 im Vergleich zu einer Anordnung mit diametral gegenüberliegenden Sender 22 und Empfänger 25 um den Faktor Vier vergrößert werden. Da bei dem bevorzugt angewendeten Sender 22 der Abstrahlwinkel 24 einstellbar ist, kann der Lichtstrahl 23 gemäß Fig. 3 auch so abgestrahlt werden, dass das Licht 23 nur am ersten Spiegel 26 reflektiert wird und von diesem direkt zum Empfänger 25 gelangt. Hier ist der Lichtweg nur um den Faktor Zwei vergrößert. Ebenso kann der Abstrahlwinkel gemäß Fig. 4 so variiert werden, dass der Lichtstrahl 23 vom ersten Spiegel 26 zunächst auf den zweiten Spiegel 27 und von diesem wieder zurück auf den ersten Spiegel 26 und von diesem nochmals zum zweiten Spiegel 27 reflektiert wird, um erst nach einer weiteren Reflektion am ersten Spiegel 26 zum Empfänger 25 zu gelangen. Bei dieser Konfiguration ist der Lichtweg um den Faktor Sechs verlängert. Es ist klar, dass auch weitere Einstellungen möglich sind, die insbesondere größere Faktoren ermöglichen.

Bei den hier gezeigten Ausführungsformen sind einerseits Sender 22 und Empfänger 25 auf der gleichen Seite der Lichtmesseinrichtung 21 angeordnet, andererseits ist die Spiegelanordnung 26, 27 zur Lichtwegverlängerung vorgesehen. Bei anderen Ausführungsformen können Sender 22 und Empfänger 25 an gegenüberliegenden Seiten angeordnet sein, wobei die Spiegelanordnung 26, 27 vorhanden oder weggelassen sein kann.

Die im Gasstrom 4 mitgeführten Öltröpfchen reflektieren beziehungsweise streuen das Licht des Senders 22, wodurch die am Empfänger 25 ankommende Lichtmenge verändert wird. Beispielsweise nimmt die am Empfänger 25 detektierbare Lichtmenge ab, je höher die Ölkonzentration im Gasstrom 4 ist. Somit kann mit Hilfe einer entsprechenden Auswerteeinrichtung, die hier beispielsweise im Computer 15 ausgebildet ist, die Ölkonzentration im Gasstrom 4 in Abhängigkeit der mit Hilfe der Lichtmesseinrichtung 21 gemessenen Lichtmenge beziehungsweise Lichtintensität ermittelt werden.

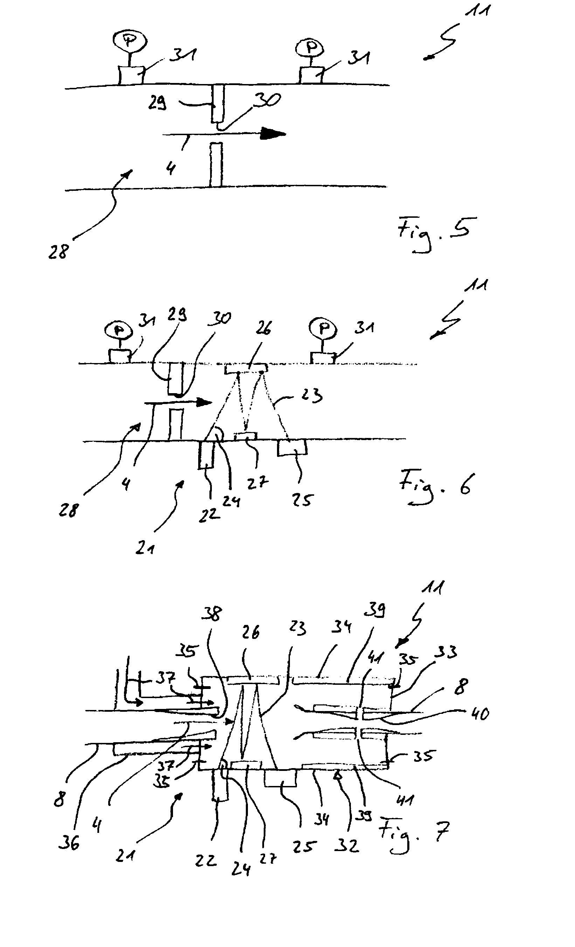

Um nun aus der Ölkonzentration die gewünschte Ölmenge ermitteln zu können, muss die Auswerteeinrichtung, die im Folgenden ebenfalls mit 15 bezeichnet wird, den Volumenstrom der Gasströmung 4 kennen. Dieser Volumenstrom kann beispielsweise aus Kennfeldern bestimmt werden, in denen der Volumenstrom in Abhängigkeit des aktuellen Betriebszustands der Brennkraftmaschine abgelegt ist. Derartige Kennfelder können beispielsweise im Rahmen von Prüfstandsversuchen ermittelt werden. Ebenso kann der Volumenstrom anhand einer aktuellen Einstellung der Fördereinrichtung 20 bestimmt werden. Auch hier können Kennfelder zugrunde gelegt werden. Bevorzugt kann jedoch die Vorrichtung 11 gemäß den Fig. 5 und 6 eine Volumenstrommesseinrichtung 28 aufweisen. Diese Volumenstrommesseinrichtung 28 kann beispielsweise eine Blende 29 aufweisen, die im Strömungspfad des Gasstroms 4 angeordnet ist. Mit anderen Worten, die Blende 29 sperrt den Strömungspfad des Gasstroms 4 bis auf den Querschnitt ihrer Blendenöffnung 30. Hierzu ist die Blende 29 im entsprechenden Teil der Leitungsanordnung 5, hier im ersten Zweig 8 angeordnet. Die Blende 29 charakterisiert sich dadurch, dass sie innerhalb des Strömungspfads eine lokal begrenzte Querschnittsreduzierung erzeugt. Stromauf und stromab der Blende 29 ist der durchströmbare Querschnitt somit größer als in der Blende 29. Ferner arbeitet die Volumenstrommesseinrichtung 28 zweckmäßig mit einer Differenzdruckmessung. Im Beispiel sind hierzu zwei Drucksensoren 31 vorgesehen, von denen der eine stromauf und der andere stromab der Blende 29 angeordnet ist und die jeweils den Druck im Gasstrom messen. Ebenso kann ein einzelner Drucksensor ausreichen, der den Druckabfall an der Blende 29 misst. Über die Druckdifferenz und den bekannten Öffnungsquerschnitt 30 der Blende 29 lassen sich die Strömungsgeschwindigkeit und der Volumenstrom bestimmten. Die Blende 29 erzeugt einen definierten durchströmbaren Querschnitt 30. Gleichzeitig bewirkt die Blende 29 eine Erhöhung der Strömungsgeschwindigkeit. Eine erhöhte Strömungsgeschwindigkeit reduziert die Gefahr von Ölablagerungen an den Komponenten der jeweiligen Messeinrichtung.

Fig. 6 zeigt eine bevorzugte Ausführungsform, bei welcher die Lichtmesseinrichtung 21 unmittelbar stromab der Volumenstrommesseinrichtung 28 angeordnet ist. Insbesondere bilden die Volumenstrommesseinrichtung 28 und die Lichtmesseinrichtung 21 hier eine baulich integrierte Einheit. Die durch die Blende 29 erzeugte erhöhte Strömungsgeschwindigkeit kann hierdurch vorteilhaft dazu genutzt werden, dass Ölablagerungen an den Komponenten der Lichtmesseinrichtung 21 reduziert auftreten.

Entsprechend Fig. 7 kann eine besondere Ausführungsform der Vorrichtung 11 ein Gehäuse 32 aufweisen, in dem zum Beispiel die Lichtmesseinrichtung 21 untergebracht ist. Zusätzlich oder alternativ kann im Gehäuse 32 die Volumenstrommesseinrichtung 28 untergebracht sein. Das Gehäuse 32 besitzt einen Gehäusekörper 33, der an die jeweilige Gasleitung, hier an den ersten Leitungszweig 8 angeschlossen ist und der an gegenüberliegenden Seiten abnehmbare Böden 34 aufweist. Entsprechende Trennebenen zwischen den Böden 34 und dem Gehäusekörper 33 sind hier durch Trennlinien 35 angedeutet. Durch die abnehmbaren Böden 34 kann die jeweilige Messeinrichtung 21, 28 einfach gewartet, insbesondere gereinigt werden.

Koaxial zum eintretenden Leitungsabschnitt 8 ist hier eine Spülgasleitung 36 angeordnet, durch die ein den zu vermessenden Gasstrom 4 koaxial umhüllender Spülgasstrom 37 erzeugt werden kann, um so die Ablagerung von Öl an den Komponenten der Lichtmesseinrichtung 21 zu reduzieren. Beim Spülgas kann es sich beispielsweise um Luft handeln. Die den Gasstrom 4 der Lichtmesseinrichtung 21 zuführende Leitung kann in ihrem hier gezeigten Endabschnitt eine konvergierende Düse 38 zur Beschleunigung der Gasströmung aufweisen. Auch diese Maßnahme reduziert die Gefahr von Verunreinigungen von Komponenten der Lichtmesseinrichtung 21.

Die Böden 34 können an ihrer Innenseite Vliesmaterial 39 tragen, das flüssige Ablagerungen aufsaugt. Ebenso kann der von der Lichtmesseinrichtung 21 wegführende Leitungsabschnitt innerhalb des Gehäuses 32 außen derartige Vlieselemente 39 aufweisen. Zusätzlich ist hier der austretende Leitungsabschnitt als Venturidüse 40 ausgestaltet, die im Bereich ihres engsten Strömungsquerschnitts radiale Saugöffnungen 41 aufweist, um den Innenraum des Gehäuses 32 besser absaugen zu können. Optional kann die Venturidüse 40 auch zur Volumenstrommessung genutzt werden.

Mit Hilfe der Vorrichtung 11 kann somit über die Messung der Ölkonzentration in Verbindung mit dem Volumenstrom die aktuell transportierte Ölmenge ermittelt werden. Die Bestimmung der Ölmenge kann dabei während stationärer Betriebszustände der Brennkraftmaschine ebenso ermittelt werden, wie während dynamischer beziehungsweise transienter Betriebszustände. Mit Hilfe des zweiten Leitungszweigs 29 kann für stationäre Betriebszustände eine Referenzmessung durchgeführt werden. Die Filtereinrichtung 16 dient dabei dazu, alles im Gasstrom mitgeführte Öl aus dem Gasstrom 4 herauszufiltern. Bei einer entsprechenden Temperatur, die beispielsweise durch entsprechende Beheizung des Gehäuses 2 realisierbar ist, können dabei flüchtige Komponenten, wie zum Beispiel Wasser, verdampft werden, so dass in der Filtereinrichtung 16 weitgehend nur Öl ausgeschieden wird. Durch direktes Messen der innerhalb einer vorbestimmten Reinigungszeit abgeschiedenen Ölmenge lässt sich ein Referenzwert für den jeweiligen Volumenstrom generieren. Insbesondere ist es zur Eichung der Vorrichtung 11 möglich, die beiden Zweige 8, 9 parallel oder vorzugsweise zeitlich nacheinander zu durchströmen.

Da sich im Betrieb der Brennkraftmaschine das Öl im Kurbelgehäuse mit zunehmender Betriebsdauer eintrübt, kann gemäß einer vorteilhaften Ausführungsform vorgesehen sein, die Trübung des Öls bei der Bestimmung der Ölkonzentration zu berücksichtigen. Hierzu kann auf entsprechende Kennfelder zurückgegriffen werden, die beispielsweise im Rahmen von Referenzmessungen vorab ermittelt worden sind. Die Messung der Öltrübung kann in vorbestimmten Zeitabständen durchgeführt werden, beispielsweise durch Analysieren einer Probe des Öls. Hierzu kann beispielsweise das mit Hilfe der Filtereinrichtung 11 ausgeschiedene Öl herangezogen werden. Ebenso kann das Öl in der Ölwanne der Brennkraftmaschine untersucht werden. Dabei ist es grundsätzlich möglich, an einer geeigneten Stelle des Ölkreises einen Trübungssensor anzuordnen, mit dem beispielsweise die Öltrübung permanent bestimmt werden kann.

Die Vorrichtung 11 beziehungsweise der gesamte Aufbau 1 bildet hier somit einen Bestandteil eines stationären Motorprüfstands. Ebenso kann die Vorrichtung 11 in die Blow-by-Gasleitung 3 einer in einem Fahrzeug angeordneten Brennkraftmaschine eingebaut sein. Die so gebildete Brennkraftmaschine umfasst somit eine Rückführleitung, also die Blow-by-Gasleitung mit der Vorrichtung 11.

## Patentansprüche

1. Verfahren zum Bestimmen einer Ölmenge in einem Gasstrom (4) in einem von einem Kurbelgehäuse einer Brennkraftmaschine, z.B. in einem Kraftfahrzeug, zu einer Frischgasanlage der Brennkraftmaschine führenden Blow-by-Gasstrom,
- bei dem Licht (23) in und/oder durch den ganzen Gasstrom (4) oder einen vorbestimmten Teil des Gasstroms (4) gestrahlt wird,
- bei dem die den Gasstrom (4) durchtretende und/oder die im Gasstrom (4) gestreute Lichtmenge und/oder Lichtintensität gemessen wird,
- bei dem in Abhängigkeit der gemessenen Lichtmenge und/oder Lichtintensität die Ölkonzentration ermittelt wird,
- bei dem aus der ermittelten Ölkonzentration in Abhängigkeit des Volumenstroms des Gasstroms (4) die vom Gasstrom transportierte Ölmenge bestimmt wird.

2. Verfahren nach Anspruch 1,
**dadurch gekennzeichnet,**
**dass** der Volumenstrom gemessen wird.

3. Verfahren nach Anspruch 2,
**dadurch gekennzeichnet,**
**dass** die Volumenstrommessung mit Hilfe einer Blende (29) durchgeführt wird, die im Strömungspfad des Gasstroms (4) angeordnet ist.

4. Verfahren nach Anspruch 2 oder 3,
**dadurch gekennzeichnet,**
**dass** die Messung der Lichtmenge und/oder der Lichtintensität im Bereich der Volumenstrommessung durchgeführt wird.

5. Verfahren nach Anspruch 4,
**dadurch gekennzeichnet,**
**dass** die Messung der Lichtmenge und/oder der Lichtintensität unmittelbar stromauf oder stromab der Blende (29) durchgeführt wird.

6. Vorrichtung zum Bestimmen einer Ölmenge in einem Blow-by-Gas von einem Kurbelgehäuse einer Brennkraftmaschine, z.B. in einem Kraftfahrzeug, zu einer Frischgasanlage der Brennkraftmaschine führenden Gasstrom (4),
- mit wenigstens einem Lichtsender (22) zum Strahlen von Licht (23) in und/oder durch den ganzen Gasstrom (4) oder einen vorbestimmten Teil des Gasstroms (4),
- mit wenigstens einem Lichtempfänger (25) zum Messen der den Gasstrom (4) durchtretenden und/oder der im Gasstrom (4) gestreuten Lichtmenge und/oder Lichtintensität,
- mit einer Auswerteeinrichtung (15) zum Ermitteln der Ölkonzentration in Abhängigkeit der gemessenen Lichtmenge und/oder Lichtintensität und zum Ermitteln der Ölmenge anhand der ermittelten Ölkonzentration in Abhängigkeit des Volumenstroms des Gasstroms (4).

7. Vorrichtung nach Anspruch 6,
**dadurch gekennzeichnet,**
**dass** eine Volumenstrommesseinrichtung (28) zum Messen des Volumenstroms des Gasstroms (4) vorgesehen ist.

8. Vorrichtung nach Anspruch 7,
**dadurch gekennzeichnet,**
**dass** die Volumenstrommesseinrichtung (28) eine Blende (29) aufweist, die im Strömungspfad des Gasstroms (4) angeordnet ist.

9. Vorrichtung nach Anspruch 7 oder 8,
**dadurch gekennzeichnet,**
**dass** eine Lichtmesseinrichtung (21) vorgesehen ist, die den wenigstens einen Lichtsender (22) und/oder den wenigstens einen Lichtempfänger (25) umfasst, wobei die Volumenstrommesseinrichtung (28) und die Lichtmesseinrichtung (21) baulich ineinander integriert sind.

10. Vorrichtung nach einem der Ansprüche 6 bis 9,
**dadurch gekennzeichnet,**
**dass** wenigstens ein Drucksensor (31) zur Erfassung des Drucks im Gasstrom (4) stromauf und/oder stromab der Lichtmessung und/oder der Volumenstrommessung vorgesehen ist.

11. Stationärer Motorprüfstand mit einer Vorrichtung (11) nach einem der Ansprüche 6 bis 10.

12. Brennkraftmaschine, insbesondere in einem Kraftfahrzeug,
- mit einer Rückführleitung (3), die Blow-by-Gas von einem Kurbelgehäuse der Brennkraftmaschine zu einer Frischgasanlage der Brennkraftmaschine führt,
- mit einer Vorrichtung (11) zum Bestimmen einer Ölkonzentration und/oder einer Ölmenge im Gasstrom (4) der Rückführleitung (3) nach einem der Ansprüche 6 bis 10.

## Claims

1. A method for determining an amount of oil in a gas flow (4) in a blow-by gas flow leading from a crankshaft housing of an internal combustion engine, for example in a motor vehicle, to a fresh-gas arrangement of the internal combustion engine
- in which light (23) is beamed into and/or through the entire gas flow (4) or a pre-determined part of the gas flow (4),
- in which the amount of light and/or light intensity passing through the gas flow (4) and/or scattered in the gas flow (4) is measured,
- in which the oil concentration is determined as a function of the measured amount of light and/or light intensity,
- in which the amount of oil transported by the gas flow is determined from the oil concentration determined as a function of the volumetric flow rate of the gas flow (4).

2. The method as specified in claim 1,
**characterised in that**
the volumetric flow rate is measured.

3. The method as specified in claim 2,
**characterised in that**
the measurement of the volumetric flow rate is conducted by means of an orifice (29) that is arranged in the flow path of the gas flow (4).

4. The method as specified in claim 2 or claim 3,
**characterised in that**
the measurement of the light amount and/or of the light intensity is conducted in the region of the volumetric flow rate measurement.

5. The method as specified in claim 4,
**characterised in that**
the measurement of the light amount and/or of the light intensity is conducted upstream or downstream from the orifice (29).

6. A device for determining an amount of oil in a blow-by gas from a gas flow (4) leading from a crankshaft housing of an internal combustion engine, for example in a motor vehicle, to a fresh-gas arrangement of the internal combustion engine
- having at least one photoemitter (22) for the beaming of light (23) into and/or through the entire gas flow (4) or a pre-determined part of the gas flow (4),
- having at least one photoreceiver (25) for measuring the amount of light and/or light intensity passing through the gas flow (4) and/or scattered in the gas flow (4),
- having at least one evaluation device (15) for determining the oil concentration as a function of the measured amount of light and/or light intensity and moreover for determining the amount of oil using the oil concentration determined as a function of the volumetric flow rate of the gas flow (4).

7. The device as specified in claim 6,
**characterised in that**
a volumetric flow rate measuring device (28) is provided for measuring the volumetric flow rate of the gas flow (4).

8. The device as specified in claim 7,
**characterised in that**
the volumetric flow rate measuring device (28) has an orifice (29) that is arranged in the flow path of the gas flow (4).

9. The device as specified in claim 7 or claim 8,
**characterised in that**
a light measuring device (21) is provided that comprises the at least one photoemitter (22) and/or the at least one photoreceiver (25), wherein the volumetric flow rate measuring device (28) and the light measuring device (21) are structurally integrated in one another.

10. The device as specified in any one of the claims 6 to 9,
**characterised in that**
at least one pressure sensor (31) for determining the pressure in the gas flow (4) is provided upstream and/or downstream from the light measurement and/or the volumetric flow measurement.

11. A stationary engine test stand having a device (11) as specified in any one of the claims 6 to 10.

12. An internal combustion engine, in particular in a motor vehicle,
- having a recirculation line (3) that conducts blow-by gas from a crankshaft housing of the internal combustion engine to a fresh-gas arrangement of the internal combustion engine,
- having a device (11) for determining an oil concentration and/or an amount of oil in the gas flow (4) of the recirculation line (3) as specified in any one of the claims 6 to 10.

## Revendications

1. Procédé pour déterminer une quantité d'huile dans un courant de gaz (4) dans un courant de gaz de carter allant d'un carter moteur d'un moteur à combustion interne, par exemple dans un véhicule automobile, vers une installation de gaz frais du moteur à combustion interne,
- dans lequel de la lumière (23) est diffusée dans et/ou à travers la totalité du courant de gaz (4) ou une partie prédéterminée du courant de gaz (4),
- dans lequel la quantité de lumière et/ou l'intensité lumineuse traversant et/ou diffusée dans le courant de gaz (4) est mesurée,
- dans lequel en fonction de la quantité de lumière et/ou l'intensité lumineuse mesurée la concentration d'huile est déterminée,
- dans lequel la quantité d'huile transportée par le courant de gaz est déterminée à partir de la concentration d'huile déterminée en fonction du courant volumique du courant de gaz (4).

2. Procédé selon la revendication 1,
**caractérisé en ce que**
le courant volumique est mesuré.

3. Procédé selon la revendication 2,
**caractérisé en ce que** la mesure du courant volumique est effectuée à l'aide d'un collimateur (29), qui est disposé dans le chemin d'écoulement du courant de gaz (4).

4. Procédé selon la revendication 2 ou 3,
**caractérisé en ce que**
la mesure de la quantité de lumière et/ou de l'intensité lumineuse est effectuée au niveau de la mesure du courant volumique.

5. Procédé selon la revendication 4,
**caractérisé en ce que**
la mesure de la quantité de lumière et/ou de l'intensité lumineuse est effectuée directement en amont ou en aval du collimateur (29).

6. Dispositif pour déterminer une quantité d'huile dans un courant de gaz (4) guidant du gaz de soufflage d'un carter moteur d'un moteur à combustion interne, par exemple dans un véhicule automobile, vers une installation de gaz frais du moteur à combustion interne,
- comportant au moins un émetteur de lumière (22) pour rayonner de la lumière (23) dans et/ou à travers la totalité du courant de gaz (4) ou une partie prédéterminée du courant de gaz (4),
- comportant au moins un récepteur de lumière (25) pour mesurer la quantité de lumière et/ou l'intensité de lumière diffusée dans le courant de gaz (4) et/ou traversant le courant de gaz (4),
- comportant un dispositif d'évaluation (15) pour déterminer la concentration d'huile en fonction de la quantité de lumière et/ou l'intensité de lumière mesurée et pour déterminer la quantité d'huile sur la base de la concentration d'huile déterminée en fonction du courant volumique du courant de gaz (4).

7. Dispositif selon la revendication 6,
**caractérisé en ce que**
un dispositif de mesure du courant volumique (28) est prévu pour mesurer le courant volumique du courant de gaz (4).

8. Dispositif selon la revendication 7,
**caractérisé en ce que**
le dispositif de mesure du courant volumique (28) présente un collimateur (29), qui est disposé dans le chemin d'écoulement du courant de gaz (4).

9. Dispositif selon la revendication 7 ou 8,
**caractérisé en ce que**
une dispositif de mesure de la lumière (21) est prévu, qui comprend au moins un émetteur de lumière (22) et/ou au moins un récepteur de lumière (25), dans lequel le dispositif de mesure de courant volumique (28) et le dispositif de mesure de lumière (21) sont intégrés l'un dans l'autre constructivement.

10. Dispositif selon une des revendications 6 à 9,
**caractérisé en ce que**
au moins un capteur de pression (31) pour détecter la pression dans le courant de gaz (4) en amont et/ou en aval de la mesure de lumière et/ou de la mesure de courant volumique est prévu.

11. Banc d'essai de moteur stationnaire comportant un dispositif (11) selon une des revendications 6 à 10.

12. Moteur à combustion interne, notamment dans un moteur à combustion interne,
- comportant une conduite de retour (3), qui guide les gaz de carter d'un carter moteur du moteur à combustion interne vers une installation de gaz frais du moteur à combustion interne,
- comportant un dispositif (11) pour déterminer une concentration d'huile et/ou une quantité d'huile dans le courant de gaz (4) de la conduite de retour (3)selon une des revendications 6 à 10.
